Europäisches Patentamt

European Patent Office

Office européen des brevets

(11) Veröffentlichungsnummer: **0 464 628 A1**

# (12) EUROPÄISCHE PATENTANMELDUNG

(21) Anmeldenummer: **91110551.8**

(22) Anmeldetag: **26.06.91**

(51) Int. Cl.5: **B62M 3/08**

(30) Priorität: **05.07.90 DE 4021357**
**05.07.90 DE 4021356**

(43) Veröffentlichungstag der Anmeldung:
**08.01.92 Patentblatt 92/02**

(84) Benannte Vertragsstaaten:
**AT BE CH DE ES FR GB IT LI LU NL**

(71) Anmelder: **Look S.A.**
**Rue de la Pique**
**F-58004 Nevers cedex(FR)**

(72) Erfinder: **Baume, Hugues**
**Le Bourg de Limon**
**F-58270 St. Benin D'Azy(FR)**
Erfinder: **Chretien, Jean-Louis**

**F-18320 Cours le Barres(FR)**

(74) Vertreter: **Dipl.-Phys.Dr. Manitz Dipl.-Ing.,**
**Dipl.-W.-Ing. Finsterwald Dipl.-Ing. Grämkow**
**Dipl.-Chem.Dr. Heyn Dipl.-Phys. Rotermund**
**Morgan, B.Sc.(Phys.) Robert-Koch-Strasse 1**
**W-8000 München 22(DE)**

(54) **Fahrrad-Pedalanordnung.**

(57) Eine Fahrradpedalanordnung besteht aus einem Fahrradpedal (1) und einem zugeordneten Schuh (2). Dabei weist der Schuh (2) in zumindest einem Bereich seiner Sohle (20) eine Kontur (25) auf, die an eine in zumindest einem Bereich des Fahrradpedals (1) ausgebildete im wesentlichen komplementäre Kontur (15) angepaßt ist und mit dieser zumindest kraftschlüssig zusammenwirkt.

Fig.1

EP 0 464 628 A1

Die Erfindung betrifft eine Fahrrad-Pedalanordnung bestehend aus einem Fahrrad-Pedal und einem zugeordneten Schuh.

Die Schuhe eines Radfahrers und die Pedale eines Fahrrades sind oftmals nicht optimal aufeinander abgestimmt, so daß eine optimale Kraftübertragung vom Schuh auf das Pedal und damit vom Fahrradfahrer auf die Tretkurbel nicht immer gewährleistet ist. Zwar gibt es für Rennräder Sicherheitspedale mit zugehörigen Schuhen, wobei Schuh und Pedal miteinander verrastet werden können, doch ist eine Verrastung zwischen Schuh und Pedal nicht immer wünschenswert. Daher kann auch bei derartigen Fahrrad-Pedalanordnungen für Rennräder das Fahrradpedal an seiner von der Aufnahmeeinrichtung abgewandten Trittseite mit einer Trittfläche versehen sein, um das Pedal auch benutzen zu können wenn ein Einrasten der Sicherheitsverriegelung zwischen Schuh und Pedal nicht erwünscht ist. Bei dieser Verwendung des Pedals kann der Schuh aber in einer Mehrzahl von möglichen Positionen auf das Pedal aufgesetzt werden, wobei nicht immer eine ergonomisch günstige Position gefunden wird.

Es ist daher die Aufgabe der Erfindung, eine Fahrrad-Pedalanordnung der eingangs genannten Gattung derart auszubilden, daß auch bei häufigem und schnellem Auf- und Absteigen eine optimale Kraftübertragung zwischen Schuh und Pedal gewährleistet ist und daß auch bei der Verwendung von Sicherheitspedalen und bevorzugt bei Benutzung der nicht mit der Aufnahmeeinrichtung versehenen Trittseite des Pedals eine reproduzierbare ergonomisch günstige Positionierung des Schuhs ermöglicht wird.

Diese Aufgabe wird nach der Erfindung dadurch gelöst, daß der Schuh in zumindest einem Bereich seiner Sohle eine Kontur aufweist, die an eine in zumindest einem Bereich des Fahrradpedals ausgebildete im wesentlichen komplementäre Kontur angepaßt ist und mit dieser zumindest kraftschlüssig zusammenwirkt.

Durch diese Ausgestaltung von Pedal und Sohle wird eine besonders gute Kraftübertragung vom Schuh auf das Pedal geschaffen.

Eine besonders vorteilhafte Lösung nach Anspruch 2 ist dadurch gekennzeichnet, daß das das Fahrradpedal an zumindest einer Trittseite mit einer profilartigen Kontur versehen ist, die mit der profilierten Sohle kraft- und formschlüssig in Eingriff bringbar ist. Vorteilhaft ist dabei, daß die profilartigen Konturen ineinander eingreifen und einen intensiven Kontakt zwischen Pedal und Sohle herstellen. Dies ist insbesondere bei Querfeldein-Fahrten oder bei Fahrten mit einem Mountain-Bike vorteilhaft, wenn Nässe oder Matsch zwischen Schuhsohle und Pedal die Reibungshaftung bei herkömmlichen Schuh-Pedal-Verbindungen stark herabsetzten würden.

Bei der Ausbildung nach Anspruch 3 sind sowohl Schuh als auch Pedal mit aufeinander abgestimmten Bezugsmarkierungen versehen, deren gegenseitiger kraftschlüssiger Eingriff vom Radfahrer beim Aufsetzen des Schuhs auf das Pedal ertastet werden kann, so daß ein schnelles und sicheres Ausrichten des Schuhs auf dem Fahrradpedal möglich ist. Ist der pedalseitige Anschlag an der rückwärtigen Kante der Trittseite ausgebildet, so wird der pedalseitige Anschlag bei der lastfreien Aufwärts-Vorne-Bewegung des Pedals automatisch wieder an den Positionierungsanschlag im Bereich der Sohle herangeführt, so daß in der darauf folgenden kraftübertragenden Vorne-Abwärts-Bewegung der Schuh in der gewünschten optimalen Stellung auf dem Pedal aufliegt.

Die Ausgestaltung nach Anspruch 4 erhöht die Vielseitigkeit der Fahrrad-Pedalanordnung, da auf Fahrstrecken, auf denen ein häufiges Auf- und Absteigen nicht erforderlich ist, eine intensive Verbindung zwischen Fahrradpedal und Schuh hergestellt werden kann.

Eine weitere vorteilhafte Lösung der Aufgabe ist nach Anspruch 5 dadurch gekennzeichnet, daß das Fahrrad-Sicherheitspedal an seiner von der Aufnahmeeinrichtung abgewandten Trittseite zumindest einen Anschlag aufweist, der kraftschlüssig mit einem im Bereich der Sohle des Radfahrerschuhs vorgesehenen Positionierungsanschlag in Eingriff bringbar ist. Durch das Vorsehen von Anschlag und Positionierungsanschlag sind sowohl Schuh als auch Pedal mit aufeinander abgestimmten Bezugsmarkierungen versehen, deren gegenseitiger kraftschlüssiger Eingriff vom Radfahrer beim Aufsetzen des Schuhs auf das Pedal ertastet werden kann, so daß ein schnelles und sicheres Ausrichten des Schuhs auf dem Fahrradpedal möglich ist. Ist der pedalseitige Anschlag an der rückwärtigen Kante der Trittseite ausgebildet, so wird der pedalseitige Anschlag bei der lastfreien Aufwärts-Vorne-Bewegung des Pedals automatisch wieder an den Positionierungsanschlag im Bereich der Sohle herangeführt, so daß in der darauf folgenden kraftübertragenden Vorne-Abwärts-Bewegung der Schuh in der gewünschten optimalen Stellung auf dem Pedal aufliegt. Besonders vorteilhaft ist dabei, wenn der sohlenseitige Positionierungsanschlag direkt an der Platine und insbesondere an der rückwärtigen Kante der Platine ausgebildet ist.

Eine ergonomisch besonders günstige Stellung nimmt der Fuß des Radfahrers bei der Ausbildung nach Anspruch 6 ein. In dieser Stellung ist eine maximale Kraftübertragung zwischen Fuß und Pedal gewährleistet.

Diese ergonomisch günstige Positionierung des Fußes auf dem Pedal kann nach Anspruch 7 auch bei Verwendung der Sicherheitsverriegelung vorgesehen sein.

Die Ausgestaltung nach Anspruch 8 ermöglicht eine besonders gute Kraftübertragung, da die profilartige Kontur des Pedals mit der profilartigen Kontur der Sohle in Eingriff gerät und so eine kraft- und formschlüssige Verbindung zwischen Sohle und Pedal erzielt wird. Eine versenkte Anordnung der Platine erlaubt dabei eine besonders wirksame Verzahnung zwischen Sohle und Pedal.

Die Ausbildung nach Anspruch 9 gestattet eine besonders gute Verzahnung, bei der sowohl eine hohe Kraftübertragung zwischen Schuh und Pedal als auch eine genaue Fixierung des Schuhs auf dem Pedal ermöglicht ist, wobei bevorzugt eine besonders wirksame Kraftübertragung gewährleistet ist, da beim Nach-Unten-Treten des Pedals die vertikalen Kanten der sohlenseitigen Stollen gegen die vertikalen Kanten der pedalseitigen Stollen gedrückt werden und so ein großer Flächenbereich zur Kraftübertragung zur Verfügung steht. Die vom Schuh auf das Pedal übertragene Kraft bewirkt dabei gleichzeitig einen sicheren Halt des Schuhs auf dem Pedal und wirkt einem Abrutschen des Schuhs von der Trittseite des Pedals entgegen. Vorzugsweise ist dabei durch die besondere Wahl des Abstandes X eine Feinpositionierung des Schuhs auf dem Pedal möglich. Die maximale Abweichung der Lage der Bewegungsachse des fußnahen Gelenks von der Idealposition vertikal über der Pedalachse beträgt bevorzugt nur 3 bis 7 mm, insbesondere 5 mm.

Durch das Vorsehen einer Abdeckplatte für die die Platine aufnehmende Vertiefung nach Anspruch 10 kann die mit Stollen versehene Fläche der Sohle vergrößert werden und so ein wirksamer Eingriff zwischen Sohle und mit Stollen versehener Trittseite des Pedals erreicht werden. Dabei kann das Profil der Abdeckplatte die gleiche oder auch eine andere Kontur aufweisen als das Profil des umliegenden, mit der pedalseitigen Kontur in Eingriff geratenden Sohlenbereichs. Die symmetrische Ausgestaltung der Abdeckplatte erlaubt die Verwendung einer einzigen Abdeckplatte für linke und rechte Schuhe.

Durch die Ausgesstaltung nach Anspruch 11 wird in Verbindung mit einem Fahrradpedal, das eine Pedalfeststelleinrichtung aufweist, ein besonders einfaches und treffsicheres Aufsteigen auf das Pedal erzielt.

Die Erfindung wird nachfolgend anhand von Beispielen unter Bezugnahme auf die Zeichnung näher erläutert; in dieser zeigt:

Fig. 1    eine erste Ausführungsform der Fahrrad-Pedalanordnung nach der Erfindung mit auf das Pedal aufgesetztem Schuh,

Fig. 2    ein Sicherheits-Pedal mit einer mit Stollen versehenen Trittseite und einer Aufnahmeeinrichtung für eine Platine,

Fig. 3    eine Profilpaarung zwischen Sohle und Pedal kurz vor dem gegenseitigen Eingriff,

Fig. 4    eine in Eingriff befindliche Profilpaarung,

Fig. 5    eine Unteransicht der Sohle eines mit einer Platine versehenen Radfahrerschuhs,

Fig. 6    eine Unteransicht der Sohle eines mit einer Abdeckplatte versehenen Radfahrerschuhs,

Fig. 7    eine zweite Ausführungsform der Fahrrad-Pedalanordnung nach der Erfindung kurz vor dem Aufsetzen des Schuhs auf das Pedal,

Fig. 8    einen auf das Pedal nach Fig. 7 aufgesetzten Radfahrerschuh.

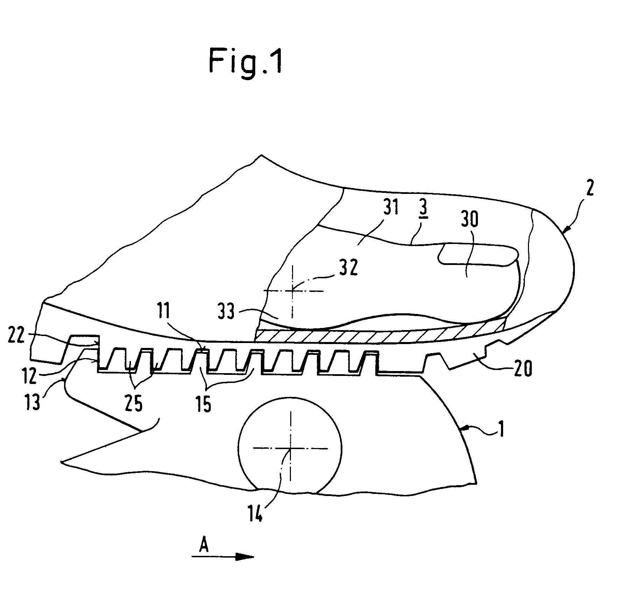

Fig. 1 zeigt ein Fahrradpedal 1, das um eine Pedalachse 14 drehbar an einer nicht gezeigten Tretkurbel gelagert ist.

An seiner oberen Trittseite 11 ist das Pedal 1 mit quer zur Fahrtrichtung A verlaufenden Stollen versehen. Die Trittseite 11 besitzt an ihrer bezüglich der Fahrrichtung A rückwärtigen Kante 13 einen Anschlag 12.

Ein zugeordneter Schuh 2 ist an der Sohle 20 im Ballenbereich mit quer zur Schuhlängsrichtung verlaufenden Stollen 25 versehen. Die Stollen 25 sind zum verzahnten Eingriff mit auf der Trittseite 11 vorgesehenen Stollen 15 ausgebildet.

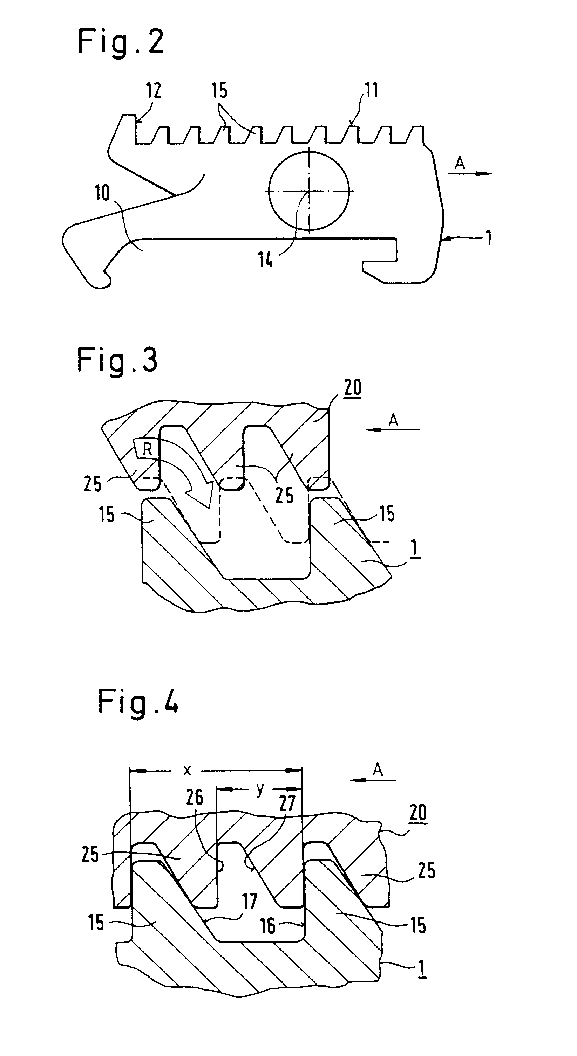

Das Zusammenwirken der schuhseitigen Stollen 25 sowie der pedalseitigen Stollen 15 sei anhand der Figuren 2 bis 4 näher erläutert. Fig. 2 zeigt ein Pedal 1, das auf der Trittseite 11 mit einer Vielzahl von im wesentlichen parallel zur Pedalachse 14 verlaufenden Stollen 15 versehen ist.

Die Stollen 15 sowie die Stollen 25 besitzen im Querschnitt die Form eines halben Trapezes, so daß ihre eine Querkante vertikal verläuft und die andere Querkante schräg verläuft.

Dabei ist die vertikale Kante 16 der Stollen 15 des Pedals 1 in Fahrtrichtung A nach vorne gerichtet, während die schräg verlaufende Kante 17 der pedalseitigen Stollen 15 rückseitig gelegen ist. An der Sohle 20 ist die Anordnung genau umgekehrt, so daß die vertikale Kante 26 der Stollen 25 bezüglich der Schuhlängsrichtung nach hinten gerichtet ist, während die schräg verlaufende Kante 27 der Stollen 25 vorne gelegen ist. Auf diese Weise entsteht, wie aus Fig. 4 erkennbar ist, eine Verzahnung zwischen Schuhsohle 20 und Pedal 1, die eine besonders gute Kraftübertragung über die eng aneinanderliegenden vertikalen Kanten 16 und 26 vom Schuh auf das Pedal ermöglicht.

Um ein unerwünschtes Festsaugen der Schuhsohle 20 am Pedal 1 zu verhindern, können die schräg verlaufenden Kanten 17 und 27 unterschiedliche Neigungswinkel aufweisen, so daß sie sich nur über einen geringen Teil ihrer Fläche berühren.

Sollten sich beim Anliegen des schuhseitigen Positionierungsanschlags 22 am pedalseitigen Anschlag 12 die Stollen 25 und die Stollen 15 gegenüberstehen, so kann im Falle einer elastischen Ausbildung des pedalseitigen Anschlags 12 und/oder des Positionierungsanschlags 22 eine geringfügige Verschiebung der Schuhsohle nach hinten erfolgen bis ein gegenseitiger Eingriff der schuhseitigen Stollenkontur und der pedalseitigen Stollenkontur möglich ist (Pfeil R und gestrichelte Linie in Fig. 3).

Die in den Figuren 3 und 4 gezeigte Anordnung der Stollen 15 mit relativ großem Abstand ist besonders vorteilhaft, da dadurch ein Verschmutzen der Trittseite und damit ein Zusetzen der Stollenzwischenräume mit Schmutz weitestgehend verhindert ist. Um trotz des großen Stollenabstandes der Trittseite eine möglichst feine Abstufung der Einrastpositionen in Schuhlängsrichtung zu erzielen, kann der Abstand zwischen den schuhseitigen Stollen 25 geringer sein. So entspricht beispielsweise bei der Ausführung nach den Fig. 3 und 4 der Abstand x zwischen zwei Stollen 15 am Pedal 1 dem Abstand zwischen drei Stollen 25 an der Sohle 20.

Der kürzere Abstand zwischen zwei Stollen 25 an der Sohle 20 (Stollenberg und Stollental) ist in Fig. 4 mit y bezeichnet und beträgt 3 bis 7 mm, insbesondere 5 mm. Durch diese Ausgestaltung wird erreicht, daß die maximale Abweichung der Lage der Bewegungsachse 32 des fußnahen Gelenks 31 von der Idealposition vertikal über der Pedalachse 14 nur 3 bis 7 mm, insbesondere 5 mm beträgt.

Selbstverständlich kann der in Verbindung mit den Fig. 3 und 4 beschriebene unterschiedliche Abstand zwischen den Stollen auch derart ausgestaltet sein, daß die kürzeren Stollenabstände an dem Pedal vorgesehen sind, während die größeren Stollenabstände an der Schuhsohle vorgesehen sind.

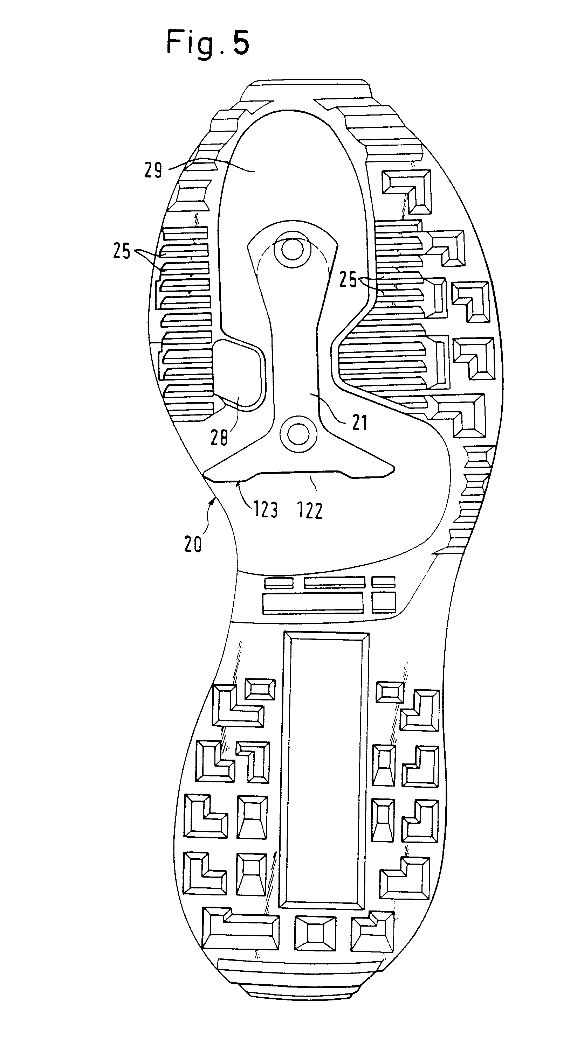

Fig. 5 zeigt eine Sohle 20 eines Radfahrerschuhs, der an seiner Vorderseite eine Vertiefung 29 aufweist, in die eine Platine 21 versenkt eingesetzt ist. Der Schuh kann auf diese Weise problemlos in eine auf der der profilierten Trittseite 11 abgewandten Seite vorgesehene Aufnahmeeinrichtung 10 eines Sicherheitspedals 1 eingerastet werden; er kann aber auch mit seiner Sohle auf die profilierte Trittseite 11 aufgestellt werden. Dazu ist die Sohle 20 des Schuhs 2 beidseitig neben der Aufnahmevertiefung 29 mit den quer zur Schuhlängsrichtung verlaufenden Stollen 25 versehen. Die Stollen 25 sind zum verzahnten Eingriff mit den auf der Trittseite 11 vorgesehenen Stollen 15 ausgebildet.

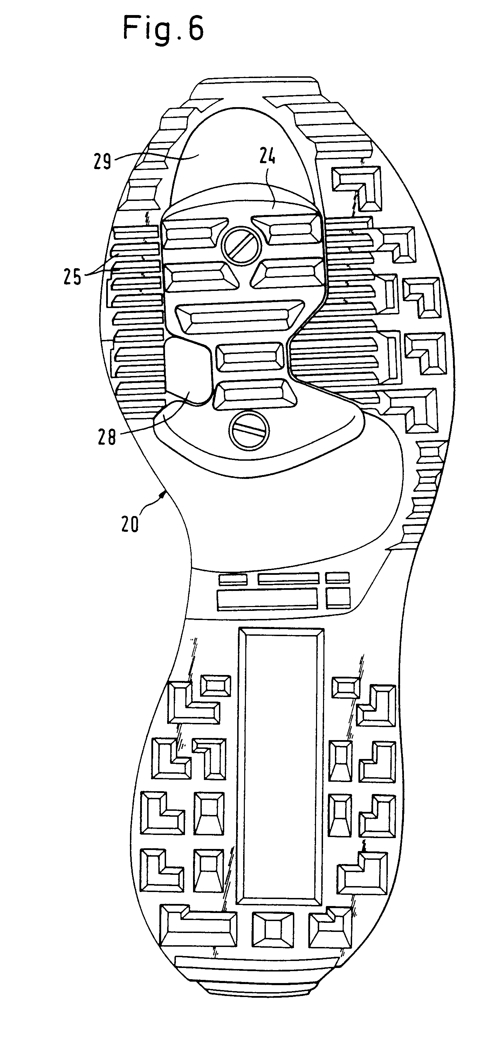

Neben der Platine 21 ist in der Sohle 20 eine Betätigungsfläche 28 vorgesehen, die gegenüber der Vertiefung 29 erhaben ist und zur Betätigung einer auf der zugehörigen Pedaltrittfläche vorgesehenen Auslöseeinrichtung für eine die Rotation des Pedals verhindernde Bremseinrichtung dient. Die Sohle ist im Fersenbereich und im Bereich der Spitze sowie im äußeren Seitenbereich mit einer von den Stollen 25 abweichenden Profilierung versehen, die nicht zum Eingriff mit der Profilierung des Pedals 1 ausgebildet ist. In Fig. 6 ist die gleiche Sohle dargestellt, wobei allerdings anstelle der Platine 31 eine Abdeckplatte 24 eingesetzt ist. Die Befestigung der Abdeckplatte 24 wird dabei mit zwei in Schuhlängsrichtung hintereinander im Abstand angeordneten Schrauben vorgenommen, die in dieselben Gewinde eingeschraubt werden, die auch zur Befestigung der Platine 21 vorgesehen sind. Die Abdeckplatte 24 kann aber auch derart angebracht werden, daß ein vorheriges Entfernen der Platine 21 nicht notwendig wird; sie kann beispielsweise an der Platine 21 befestigt werden.

Die Abdeckplatte 24 verdeckt dabei im Ballenbereich des vom Schuh aufgenommenen Fußes die Aussparung 29. Die Abdeckplatte ist ebenfalls mit einer Profilierung versehen, die im gezeigten Beispiel von der Profilierung der Stollen 25 verschieden ist, grundsätzlich aber auch dieselbe Profilform wie die Stollen 25 aufweisen kann, wobei dann die Stollen der Abdeckplatte 24 ebenfalls im gleichen, im wesentlichen rechten Winkel zur Schuhlängsachse verlaufen wie die Stollen 25 und die Stollen der Abdeckplatte 24 jeweils eine Flucht mit dem zugeordneten Stollen an der linken und an der rechten Seite der Aussparung 29 bilden. Auf diese Weise entsteht eine durchgehende, von parallel liegenden Stollen 25 gebildete aktive Fläche im Ballenbereich der Sohle 20, die einen besonders wirksamen Eingriff mit den Stollen 15 der Trittfläche 11 des Pedals 1 gewährleistet. Lediglich die Betätigungsfläche 28 für die Bremseinrichtung des Pedals kann dabei den Stollenverlauf in einem Bereich der aktiven Fläche unterbrechen.

An der Sohle 20 ist am rückwärtigen Ende des mit den Stollen 25 versehenen Bereichs ein Positionierungsanschlag 22 vorgesehen, der gegen einen pedalseitigen Anschlag 12 zur Anlage kommt. Bei dieser in Fig. 1 gezeigten Stellung liegt die Bewegungsachse 32 des fußnahen Gelenks 31 der großen Zehe 30 eines im Schuh 2 aufgenommenen Fußes 3 vertikal über der Drehachse 14 des Pedals 1. Diese Lage des Fußes 3 bezüglich der Pedalachse 14 erlaubt eine ergonomisch besonders optimale Kraftübertragung zwischen Fuß und Pedal, da die vom Fuß beim Treten über das Gelenk 31 und den darunter befindlichen Ballen 33 auf die Schuhsohle 20 ausgeübten Druckkräfte direkt in die Pedalachse 14 und damit in die Tretkurbel eingeleitet werden, ohne daß dabei ein unerwünschtes Kippmoment des Pedals 1 um die Pedalachse 14 erzeugt wird. Infolgedessen kann bei dieser Anordnung die vom Radfahrer aufgebrachte Tretkraft im wesentlichen vollständig zum Antrieb des Rades genutzt werden.

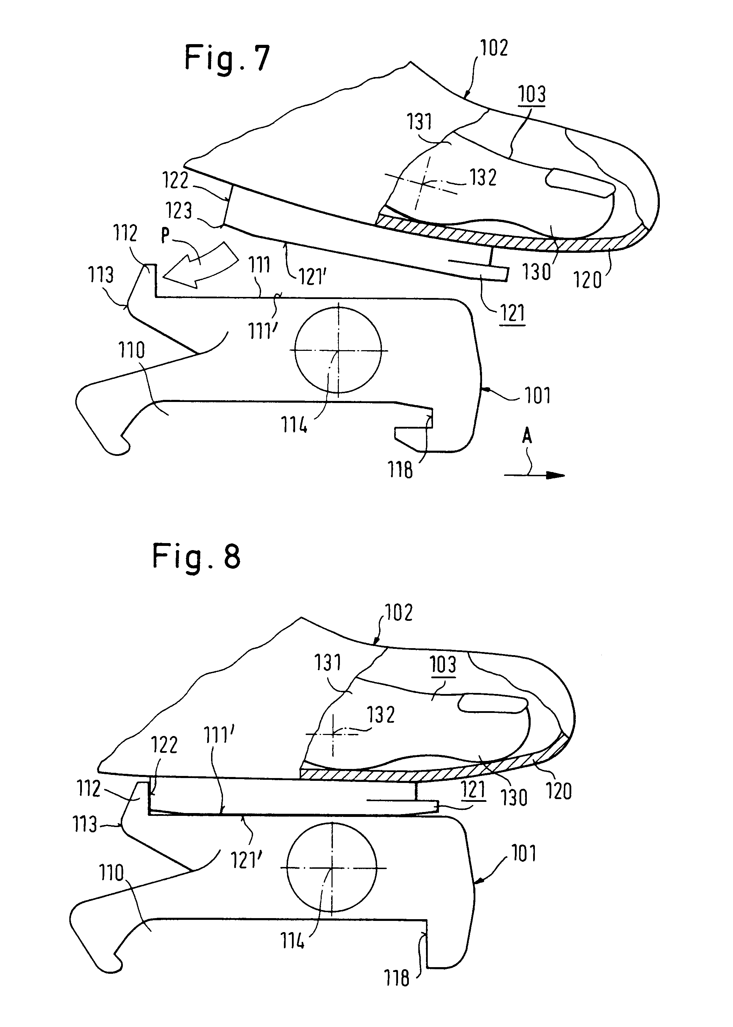

Fig. 7 zeigt ein Fahrrad-Sicherheitspedal 101, das um eine Pedalachse 114 drehbar an einer nicht gezeigten Tretkurbel gelagert ist. Das Pedal 101 zeigt an seiner unteren Seite eine Aufnahmeeinrichtung 110 für eine Platine 121 eines Radfahrerschuhs 102 auf.

An seiner oberen, von der Aufnahmeeinrichtung 110 abgewandten Trittseite 111 ist das Pedal 101 mit einer im wesentlichen ebenen Trittfläche 111' versehen. Die Trittseite 111 besitzt an ihrer bezüglich der Fahrrichtung A rückwärtigen Kante 113 einen Anschlag 112, der nach oben aus der Trittfläche 111' hervorsteht.

Am Radfahrerschuh 102 ist an dessen Sohle 120 im vorderen Bereich die Platine 121 angebracht, die normalerweise zum Eingriff mit der Aufnahmeeinrichtung 110 des Pedals 101 ausgebildet ist. Die Platine 121 weist an ihrer rückwärtigen Kante 123 einen Positionierungsanschlag 122 auf, der im wesentlichen vertikal zur unteren Fläche 121' der Platine 121 verläuft. Der Positionierungsanschlag 122 kann aber auch direkt an der Sohle 120 ausgebildet sein.

Beim Aufsetzen des Schuhs 102 auf die Trittseite 111 des Pedals 101 wird zunächst der vordere Bereich der Platine 121 auf die Trittfläche 111' aufgesetzt und dann der Schuh im Sinne des Pfeils P rückwärts nach unten bewegt, so daß der schuhseitige Positionierungsanschlag 122 gegen den pedalseitigen Anschlag 112 zur Anlage kommt. Auch bei dieser in Fig. 8 gezeigten Stellung liegt die Bewegungsachse 132 des fußnahen Gelenks 131 der großen Zehe 130 eines im Schuh 102 aufgenommenen Fußes 103 vertikal über der Drehachse 114 des Pedals 101.

Die gleiche ergonomisch günstige Ausrichtung des Schuhs auf dem Pedal kann auch bei Benutzung der Aufnahmeeinrichtung 110 für die Platine 121 erzielt werden, wenn im Bereich der Aufnahmeeinrichtung 110 ebenfalls ein pedalseitiger Anschlag 118 für den schuhseitigen Positionierungsanschlag 122 vorgesehen ist.

Bei der in Fig. 8 gezeigten Positionierung des Schuhs 102 auf dem Pedal 101 kann die ergonomisch günstige Lage des Schuhs 102 auf dem Pedal 101 dadurch verbessert werden, daß sowohl die Trittseite 111 als auch die untere Fläche 121' der Platine 121 oder bei in der Sohle 120 versenkt angeordneter Platine 121 die Sohle 120 mit einer profilartigen Kontur versehen sind, wie dies in Verbindung mit dem ersten Ausführungsbeispiel beschrieben worden ist.

## Patentansprüche

1. Fahrrad-Pedalanordnung bestehend aus einem Fahrradpedal und einem zugeordneten Schuh, dadurch **gekennzeichnet,** daß der Schuh (2) in zumindest einem Bereich seiner Sohle (20) eine Kontur aufweist, die an eine in zumindest einem Bereich des Fahrradpedals (1) ausgebildete im wesentlichen komplementäre Kontur angepaßt ist und mit dieser zumindest kraftschlüssig zusammenwirkt.

2. Fahrrad-Pedalanordnung, insbesondere nach Anspruch 1, bestehend aus einem Fahrradpedal und einem zugeordneten Schuh mit einer profilierten Sohle, dadurch **gekennzeichnet,** daß das Fahrradpedal (1) an zumindest einer Trittseite (11) mit einer profilartigen Kontur versehen ist, die mit der profilierten Sohle (20) kraft- und formschlüssig in Eingriff bringbar ist.

3. Fahrrad-Pedalanordnung nach einem der vorhergehenden Ansprüche, dadurch **gekennzeichnet,** daß das Fahrradpedal (1) an seiner Trittseite (11) zumindest einen Anschlag (12) aufweist, der kraftschlüssig mit einem im Bereich der Sohle (20) des Schuhs (2) vorgesehenen Positionierungsanschlag (22) in Eingriff bringbar ist, wobei insbesondere der pedalseitige Anschlag (12) an der bezüglich der Fahrtrichtung (A) rückwärtigen Kante (13) der Trittseite (11) ausgebildet ist und bevorzugt aus einem elastischen Werkstoff, wie beispielsweise Gummi, besteht.

4. Fahrrad-Pedalanordnung nach einem der vorhergehenden Ansprüche, dadurch **gekennzeichnet,** daß in der Sohle (20) eine Platine (21) für ein Fahrradsicherheitspedal (1) versenkt angeordnet ist und daß das Fahrradsicherheitspedal (1) an einer Seite mit einer Sicherheits-Aufnahmeeinrichtung (10) für die Platine (21) versehen ist.

5. Fahrrad-Pedalanordnung, insbesondere nach Anspruch 1 bestehend aus einem Fahrrad-Sicherheitspedal mit einer Aufnahmeeinrichtung für eine Platine eines zugeordneten Radfahrerschuhs, dadurch **gekennzeichnet,** daß das Fahrrad-Sicherheitspedal (1) an seiner von der Aufnahmeeinrichtung (10) abgewandten Trittseite (11) zumindest einen Anschlag (12) aufweist, der kraftschlüssig mit einem im Bereich der Sohle (20) des Radfahrerschuhs (2) vorgesehenen Positionierungsanschlag (22) in Eingriff bringbar ist, wobei insbesondere der pedalseitige Anschlag (12) an der bezüglich der Fahrtrichtung (A) rückwärtigen Kante (13) der Trittseite (11) ausgebildet ist und vorzugsweise der im Bereich der Sohle (20) gelegene Positionieranschlag (22) an der Platine (21), insbesondere an deren rückwärtiger Kante (23) ausgebildet ist und wobei bevorzugt der pedalseitige Anschlag (12) aus einem elastischen Werkstoff, wie beispielsweise Gummi, besteht.

6. Fahrrad-Pedalanordnung nach einem der vorhergehenden Ansprüche,
   dadurch **gekennzeichnet,**
   daß Anschlag (12) und Positionierungsanschlag (22) eine Fixierung des Schuhs (2) in Längsrichtung derart gewährleisten, daß die Bewegungsachse (32) des fußnahen Gelenks (31) der großen Zehe (30) eines im Schuh (2) aufgenommenen Fußes (3) bei im wesentlichen waagerechtem Pedal (1) vertikal über der Pedalachse (14) liegt.

7. Fahrrad-Pedalanordnung nach Anspruch 6,
   dadurch **gekennzeichnet,**
   daß auch an der Aufnahmeeinrichtung (10) für die Platine (21) ein entsprechend positionierter Anschlag (18) vorgesehen ist.

8. Fahrrad-Pedalanordnung nach einem der vorhergehenden Ansprüche,
   dadurch **gekennzeichnet,**
   daß die von der Aufnahmeeinrichtung (10) für die Platine (21) abgewandte Trittseite (11) des Pedals (1) mit einer profilartigen Kontur versehen ist und daß die Sohle (20) des Radfahrerschuhs (2) ein Profil mit angepaßter Kontur aufweist, wobei vorzugsweise die Platine (21) in der Sohle (20) versenkt angeordnet ist.

9. Fahrrad-Pedalanordnung nach einem der vorhergehenden Ansprüche,
   dadurch **gekennzeichnet,**
   daß das Profil der Sohle (20) und das Profil der Trittseite (11) des Pedals (1) aus querverlaufenden Stollen (25; 15) bestehen, die in Schuhlängsrichtung bzw. in Fahrtrichtung geschnitten einen halbtrapezförmigen Querschnitt mit einer vertikal (26; 16) und einer schräg (27; 17) verlaufenden Kante aufweisen, wobei bevorzugt die vertikale Kante (16) an der Vorderseite eines pedalseitigen Stollens (15) und die vertikale Kante (26) an der Rückseite eines sohlenseitigen Stollens (25) vorgesehen sind und vorzugsweise der in Fahrtrichtung bzw. Schuhlängsrichtung gemessene Abstand (X) zwischen zwei Stollen am Pedal (1) bzw. an der Sohle (20) dem Abstand zwischen zumindest drei Stollen an der Sohle (20) bzw. am Pedal (1) entspricht und/oder der Abstand (Y) zwischen zwei in kürzerem Abstand voneinander angeordneten Stollen 3 bis 7 mm, insbesondere 5 mm, beträgt.

10. Fahrrad-Pedalanordnung nach einem der vorhergehenden Ansprüche,
    dadurch **gekennzeichnet,**
    daß eine Abdeckplatte (24) für die die Platine (21) aufnehmende Vertiefung (29) der Sohle vorgesehen ist, die ebenfalls ein an die pedalseitige Kontur angepaßtes Profil aufweist und bevorzugt bezüglich der Schuhlängsrichtung symmetrisch ausgebildet ist.

11. Fahrrad-Pedalanordnung nach einem der vorhergehenden Ansprüche,
    dadurch **gekennzeichnet,**
    daß im Bereich der Sohle (20) eine Betätigungsfläche (28) zum Lösen einer Pedal-Feststelleinrichtung vorgesehen ist.

# Fig.1

# Fig.2

# Fig.3

# Fig.4

## Fig. 5

# Fig.6

Fig. 7

Fig. 8

**Europäisches
Patentamt**

**EUROPÄISCHER
RECHERCHENBERICHT**

Nummer der Anmeldung

**EP 91 11 0551**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 964 343 (J. H. LAUTERBACH)<br>* Zusammenfassung; Abbildungen *<br>– – – | 1,2,4,5,8 | B 62 M 3/08 |
| X,A | FR-A-2 510 967 (M. CHAVANON)<br>* Seite 3, Zeile 15 - Seite 4, Zeile 25; Abbildungen 1-3 *<br>– – – | 1,2,4,8,5,9 | |
| X,A | US-A-4 836 047 (J. M. ALCAMO)<br>* Zusammenfassung; Abbildungen *<br>– – – | 1-3,8,6,9 | |
| X,A | FR-E-61 214 (H. BREAU)<br>* das ganze Dokument *<br>– – – | 1,2,9 | |
| A | FR-A-2 628 381 (A. ROMANO)<br>* Zusammenfassung; Abbildungen *<br>– – – – – | 11 | |

| | RECHERCHIERTE SACHGEBIETE (Int. Cl.5) |
|---|---|
| | B 62 M |

Der vorliegende Recherchenbericht wurde für alle Patentansprüche erstellt

| Recherchenort | Abschlußdatum der Recherche | Prüfer |
|---|---|---|
| Den Haag | 14 Oktober 91 | FRANKS B.G. |